# EUROPEAN PATENT SPECIFICATION

(11) **EP 4 044 589 B1**
(45) Date of publication and mention of the grant of the patent: **13.08.2025**
(21) Application number: 22153469.6
(22) Date of filing: 26.01.2022
(51) Int. Cl.: H04N 7/14

(54) **CONTEXT DEPENDENT FOCUS IN A VIDEO FEED**
KONTEXTABHÄNGIGER FOKUS IN EINEM VIDEO-FEED
FOCALISATION DÉPENDANT DU CONTEXTE DANS UN FLUX VIDÉO

(30) Priority: 12.02.2021 FI 20215143
(43) Date of publication of application: 17.08.2022
(73) Proprietor: Nokia Technologies Oy, 02610 Espoo (FI)
(72) Inventor: LEHTINIEMI, Arto Juhani, 33880 Lempäälä (FI); LEPPÄNEN, Jussi Artturi, 33580 Tampere (FI); LAAKSONEN, Lasse Juhani, 33520 Tampere (FI)
(74) Representative: Kolster Oy Ab

(56) References cited:
- EP-A1- 1 705 911
- US-A1- 2019 147 175
- US-B1- 10 904 485
- US-B1- 8 681 203

## Description

### FIELD

The present application relates to providing video feed and to adjusting the video feed.

### BACKGROUND

When providing video feed, that may be provided in real-time, situations change. If the video feed is then transmitted to other users, it may be that the other users are disturbed if a situation changes or they may be paying attention to unwanted aspects of the video feed. It may be beneficial therefore to help the recipients of the video feed to pay attention to aspects of the video that best convey the message that is intended to be conveyed.

### BRIEF DESCRIPTION

The scope of protection sought for various embodiments is set out by the independent claims. The exemplary embodiments and features, if any, described in this specification that do not fall under the scope of the independent claims are to be interpreted as examples useful for understanding various embodiments of the invention.

### BRIEF DESCRIPTION OF THE DRAWINGS

FIG. 1 illustrates an exemplary embodiment of a system used to connect to an online video meeting.
FIG. 2 - FIG. 8 illustrate exemplary embodiments of modifying a video feed transmitted to an online video meeting.
FIG. 9 illustrates an exemplary embodiment of an apparatus.
FIG. 10 illustrates a flow chart according to an exemplary embodiment.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device. The above-described embodiments of the circuitry may also be considered as embodiments that provide means for carrying out the embodiments of the methods or processes described in this document.

As used herein, the term "determining" (and grammatical variants thereof) can include, not least: calculating, computing, processing, deriving, measuring, investigating, looking up (e.g., looking up in a table, a database or another data structure), ascertaining and the like. Also, "determining" can include receiving (e.g., receiving information), accessing (e.g., accessing data in a memory), obtaining and the like. Also, "determining" can include resolving, selecting, choosing, establishing, and the like.

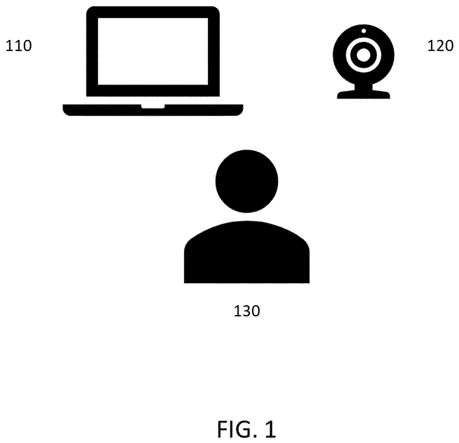

For people to meet they do not need to be physically in the same location. With the help of video feeds obtained from one or more cameras, video calls and video meetings taking place online people may have meetings in which they see each other's reactions and presence even though they are physically not in the same location. FIG. 1 illustrates an exemplary system that enables a video feed to be transmitted such that an online video meeting with multiple participants or a video call to another participant may take place. A device 110, that may be a computing device such as a laptop computer, a mobile phone or a tablet computer, is capable of connecting to an online meeting that may also be understood as a video call. The device 110 further comprises, or is connected to, at least one display on which the meeting is visually rendered. The visual rendering may comprise one or more other participants and optionally also a video feed of the user 130 that uses the device 110 to connect to the online meeting. The video feed is enabled by one or more cameras 120 that may be comprised in the device 110 or the device 110 may be connected to those. The device 110 further comprises or is connected to at least one microphone (not shown) that is used to capture audio from the user 130 to the video feed and the device 110 is also connected to, or it comprises, one or more loudspeakers (not shown) that render the audio from others in the online meeting.

The one or more cameras 120 may comprise various types of cameras. For example, a regular camera such as a webcam and/or a digital single lens reflex, DSLR or mirrorless system camera. DSLRs and mirrorless cameras may have a benefit of better image quality due to larger high-resolution image sensors and the use of variety of different lenses compared to for example a camera comprised in the device 110.

If an online meeting comprises video feed from one of more participants, a participant may find it difficult to get attention from other participants when trying to speak due to for example latency in audio, which may cause multiple participants ending up speaking simultaneously. Latency may be caused for example by a variety of different techniques and devices used to connect to the online video meeting. Yet, if participants are provided with a visual indication that a participant is about to speak, that may help to avoid problems such as participants speaking on top of each other.

It may also happen that when a participant is attending an online video meeting and transmitting a video feed, there may situations in which the participant is to speak such that the participants in the online video meeting do not hear him speak. If for example the participant needs to talk to someone in a same room, then the participant may not wish to unmute his microphone. Yet, others may recognize from the video feed that the participant speaks and may think that he just forgot to unmute his microphone. Thus, a visual indication regarding that the microphone is muted on purpose could be helpful. Also, if another person accidentally moves to the field of view of the camera providing the video feed, it may be awkward and it might be useful to have the video feed edited such that the other person becomes less visible for example.

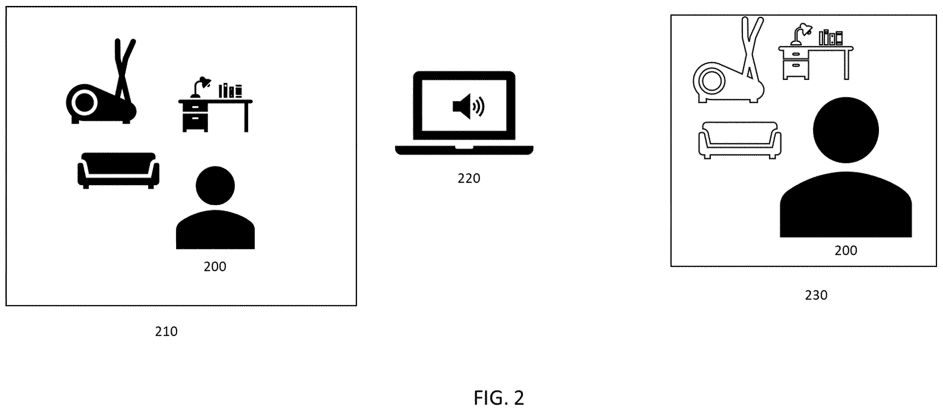

FIG. 2 illustrates an exemplary embodiment of modifying a video feed transmitted to an online video meeting when a user unmutes the microphone that is used to capture audio to the video feed. In this exemplary embodiment a user 200 is captured to a video feed 210 that is then transmitted to the online video meeting. The system used to join the online video meeting and to transmit the video feed to the online video meeting may be any suitable system, such as the system described in the exemplary embodiment of FIG. 1. In this exemplary embodiment the video feed 210 captures the real physical environment in which the user 200 is physically located. At first the user 200 has muted the microphone. As the user 200 wishes to say something to the other participants in the online video meeting, the user unmutes the microphone. In other words, the status of the video feed transmitted to the online video meeting changes as the microphone is unmuted as is illustrated in 220. The status of the online video meeting may thus be understood as the status of the microphone in this exemplary embodiment. It is to be noted that the status of the video feed may also be understood as number of people recognized in the video feed in some other exemplary embodiments. As the status of the video feed changes, that is the status of the microphone changes from muted to unmuted, due to various reasons there may be latency in the other participants actually hearing the user 200 speak, which may lead to a situation in which the other participants hardly notice the user 200 is trying to speak.

However, as it is determined that the status of the video feed changes, the video feed is visually modified. For example, focus and/or cropping may be applied to the video feed. In this exemplary embodiment, the focus in the video feed is now on the user 200 in the visually modified video feed 230 that is then transmitted to the online video meeting. According to the invention, the environment around the user is blurred, that is, reducing focus from the background. Further, additionally, the video feed may be cropped such that the part of the environment of the user is no longer part of the video feed. Further alternatively or additionally, the aspect ratio between the user 200 and the background in the video feed may be changed to help the other participants to focus on the user who is about to speak. These visual modifications may have the benefit of naturally drawing the attention of the other participants to the user 200 who is about to speak although due to latency his voice is not yet heard, which may offer a better user experience making it easier to follow the upcoming speaker. The other participants may, in some exemplary embodiments, see this change in the transmitted video feed already before the user starts to speak. Furthermore, the blurring the background may help to draw full attention to the user 200 who is about to speak. The visual modifications to the video feed may be achieved using one or more suitable software algorithms designed for image processing and/or parameters regarding the one or more cameras and/or lenses capturing the video feed may be modified. For example, lenses may offer, e.g., bokeh of the area that are not in focus. Further, settings such as aperture and focus point may be modified.

In some exemplary embodiments the video feed may be manipulated by performing a slower zoom-in towards the user to prolong the transition. In such exemplary embodiment, the user may not wish to be focused to while unmuting. Thus, while unmuting, the user may provide a user input, received by the device of the system, that is interpreted to trigger a zooming mode, which in this exemplary embodiment is a slower zoom-in than a default zoom-in. The user input may be any suitable type, for example double pressing the unmute button.

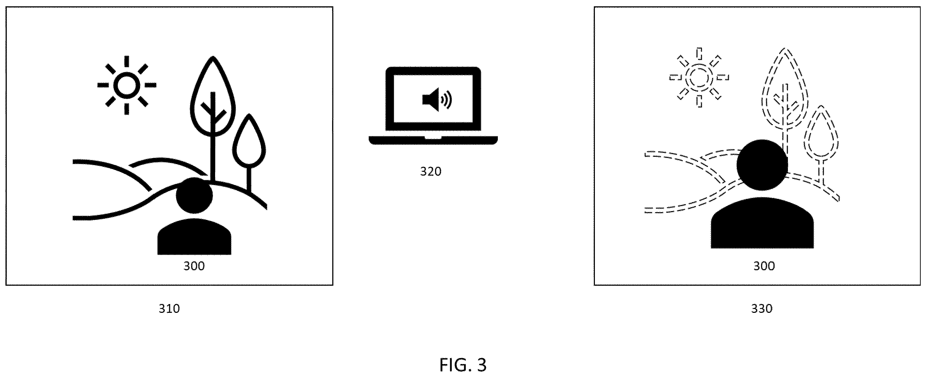

In the exemplary embodiment of FIG. 2 the user had a real-life background. The modifications to the video feed discussed in that exemplary embodiment are also applicable to artificial backgrounds used in a video feed transmitted to an online video meeting. FIG. 3 illustrates and exemplary embodiment in which the background of the video feed 310 comprises an artificial background. The artificial background may be for example such that the user is perceived to be in front of a landscape that may be obtained from a picture.

In the exemplary embodiment of FIG. 3, a user 300 participates in an online video meeting by using any suitable system, such as the system described in the exemplary embodiment of FIG. 1. The user 300 is, in this exemplary embodiment, first muted. In other words, the status of the video feed 310 transmitted to the online video meeting is the status of the microphone that provides audio to the video feed. It is to be noted that in some exemplary embodiments, there may be more than one microphones providing audio to the video feed. In this exemplary embodiment, the video feed comprises the user 300 rendered in front of an artificial background. As the user decides to speak, the user changes the status of the video feed 310 by unmuting the microphone as illustrated in 320. After the status of the video feed has been changed, a modified video feed 330 is transmitted to the online video meeting. In the modified video feed, that background is blurred and the user 300 is in focus. Additionally, also cropping of the image captured to the modified video feed 330 may be applied. Parameters regarding one or more cameras used to capture the video feed transmitted to the online video meeting and/or image processing parameters, may be changed such that the modified video feed 330 is obtained. For example, a camera parameter change may be synthesized, or algorithm settings may be applied to the artificial background image to create similar experience as with a live background like in the previous exemplary embodiment.

In the exemplary embodiments of FIG. 2 and FIG. 3, it is to be noted that if the status of the modified video feed changes, for example the status of the microphone changes back to the muted status, then the modifications applied to the modified video feed may no longer be applied.

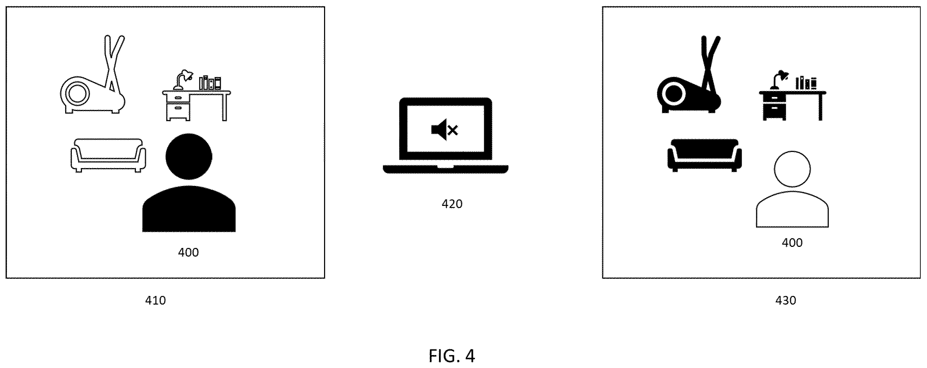

FIG. 4 illustrates an exemplary embodiment in which the status of the video feed changes. In this exemplary embodiment, the user 400 participates in an online video meeting using a system as described above. The user 400 is rendered in a video feed 410 and the status of a microphone providing the audio to the video feed 410 is muted as illustrated in 420. In this exemplary embodiment, the status of the microphone does not change. Yet, the status of the video feed changes. The status of the video feed in this exemplary embodiment comprises the status of the user 400. In this exemplary embodiment, the status of the user 400 changes as the user speaks or stays quiet. It may be recognized, by suitable software algorithms, that the user speaks, but that the status of the microphone is muted. If the other participants of the online video meeting can see the user 400 speaking, but do not hear anything, that may cause a confusing situation and disturb the meeting while the user is intentionally keeping the microphone muted as he talks to someone else who is not a participant in the online video meeting. The user could also turn of the video, which however may also be an awkward solution in terms of user experience.

As the status of the video feed changes in this exemplary embodiment, the video feed is modified. In this exemplary embodiment, the modified video feed 430 is transmitted to the online video meeting. The modified video feed 430 comprises modification to the video feed that focuses away from the user 400. This way the other participants do not see the user clearly and thus do not see him speaking, at least not clearly. Additionally, in the modified video feed 430 the focus may be shifted to the background thereby drawing attention there. In some exemplary embodiments, the video feed may be obtained using more than one camera. For example, with two cameras, a view may be selected where the user is not seen speaking and selection of a view in which the user is not seen speaking may be used as the modification applied to the modified video feed. In this manner, the attention of other participants is not drawn to the user as he is speaking while the microphone is muted, and the other participants do not expect to hear the voice either.

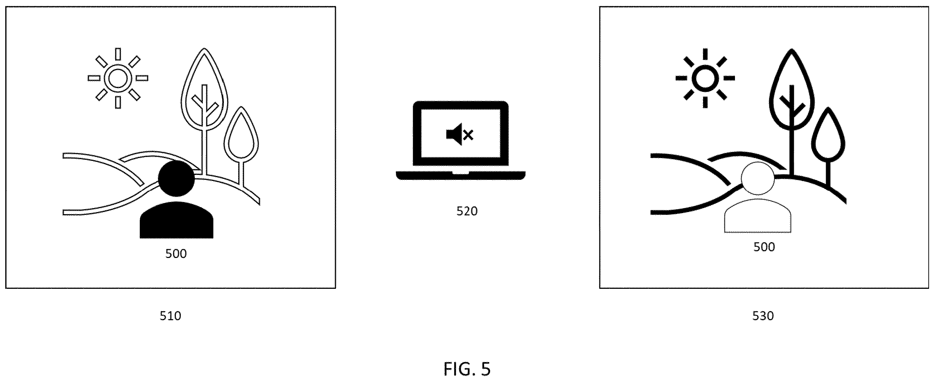

The modifications applied to the video feed in the exemplary embodiment of FIG. 4 may also be applied to artificial backgrounds. In FIG. 5 an exemplary embodiment in which the status of the video feed changes is illustrated. In this exemplary embodiment, the user 500 participates in an online video meeting using a system as described above. The user 500 is rendered in a video feed 510 in which the background is an artificial background instead of the physical environment in which the user 500 is located at. The status of a microphone providing the audio to the video feed 510 is muted as illustrated in 520. In this exemplary embodiment, the status of the microphone does not change although the status of the video feed changes. The status of the video feed in this exemplary embodiment comprises the status of the user 400, which in this exemplary embodiment changes as the user speaks or becomes quiet after speaking. As the status of the video feed changes in this exemplary embodiment, the video feed is modified. In this exemplary embodiment, the modified video feed 530 is transmitted to the online video meeting. The modified video feed 530 comprises modification to the video feed that focuses away from the user 500. Additionally, in the modified video feed 530 the focus may be shifted to the background thereby drawing attention there. In some exemplary embodiments, as the status of the video feed changes, the artificial background may algo change to for example another image while the user is out of focus.

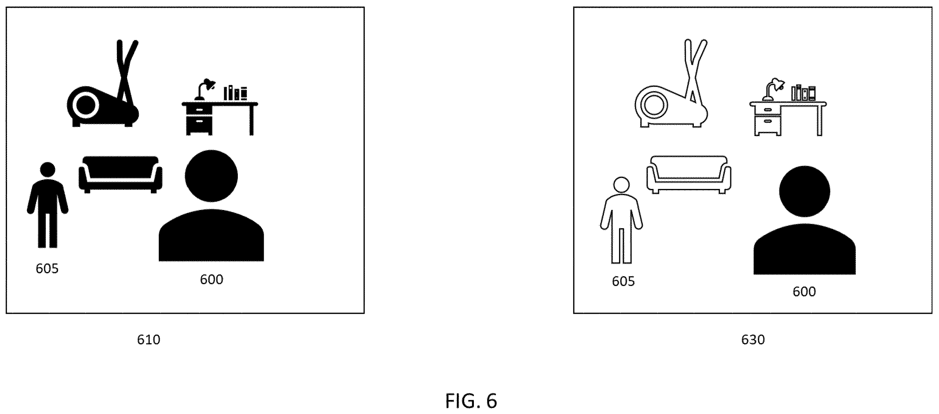

During a video call, it may also happen that a user is in a video call and another person accidentally enters the background of the video feed. In this case the user is not muted and not having an outside call discussion as in in the previous exemplary embodiments. In such a case, the change in the amount of people recognized, by suitable software algorithms, from the video feed may be understood as the status of the video feed. Thus, if the amount of people recognized in the video feed changes, so does the status of the video feed. This is illustrated in the exemplary embodiment illustrated in FIG. 6. In this exemplary embodiment, a user 600 is participating in a video call using a system such as the one described above. The video feed 610 transmitted to the online video meeting has the room the user is in as a background. In this exemplary embodiment it is recognized that another person 605 enters the captured video feed. As the number of people recognized in the captured video feed changes to two, it is determined that the status of the video feed changes as well.

Consequently, it is determined that the video feed is to be modified.

In this exemplary embodiment, in the modified video feed 630 the background is blurred causing the other person 605 to be blurred in the modified video feed 630 that is then transmitted to the online video meeting. This has the advantage of maintaining the attention to the user 600. It also allows someone to enter the same space without being part of the video call accidentally. In some exemplary embodiments, there may be an indication when the other person 605 is blurred and the user 600 may be allowed to override the action of blurring the background if the appearance of the other person 605 was intentional.

Additionally, in some exemplary embodiments, settings of a camera aperture and/or artificial blurring may be dependent on the amount of activity in the background detected from the video feed while the user 600 is in the online video meeting.

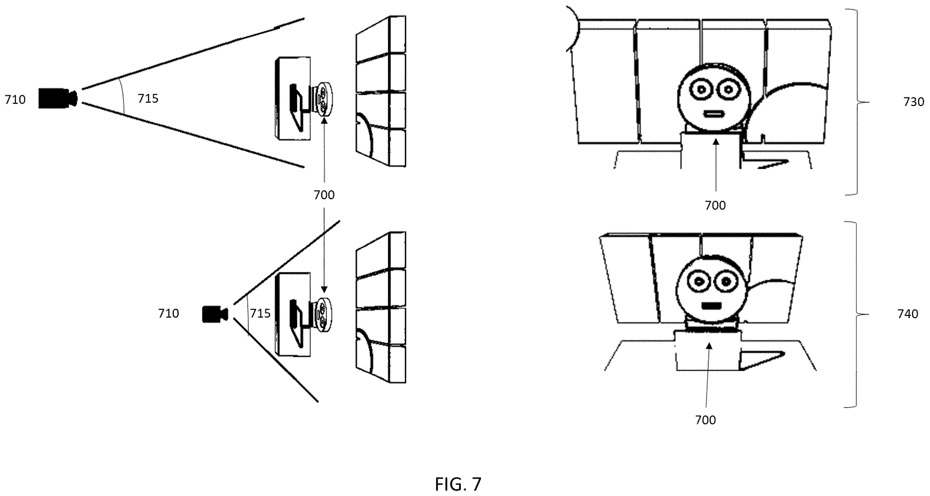

FIG. 7 illustrates another exemplary embodiment in which the status of the video feed transmitted to an online video meeting is determined to change as a status of a microphone changes. In this exemplary embodiment, the modification of the video feed comprises applying a so-called Dolly-effect. The Dolly-effect may be understood as modifying the video feed such that the head of the user is maintained at constant size, but field of view and a camera distance are modified to create a noticeable effect.

In this exemplary embodiment, the user 700 is participating in an online video meeting. To attend the online video meeting, the user 700 uses a system that comprises a camera 710 in addition to a computer and a microphone. In this exemplary embodiment, the position of the camera and zoom level may be modified. That is, the angle of view as well as the field of view 715 of the camera 710 may be modified. As the user is muted, the video feed 730 is transmitted to the online video meeting. The user then unmutes the microphone and consequently, it is determined that the status of the video feed is changes as the status of the microphone is changed. Based on the change in the status of the video feed, it is determined that the video feed is to be modified. In this exemplary embodiment, the Dolly-effect is applied. The face of the user 700 remains at constant size, but in the modified video feed 740 transmitted to the online video meeting the elements in the background appear to move away from the user 700. In this exemplary embodiment, the system changes simultaneously both the position of the camera and the level of zoom such that the head of the user 700 remains at constant size but the background of the user 700 changes in a noticeable manner. As the elements in the background consequently appear to move and change their size in ways that is counterintuitive for the human visual system, the other participants will notice a change in the modified video feed 740 that naturally draws their attention to the user 700. Additionally, digital modification may be applied to the modified video feed 740 in combination with in-camera cropping and change of the field of view 715 to achieve this effect. The change of the field of view may be achieved for example by using electronically controlled lens zoom. Thus, the background effect may be done by adapting the virtual background or a real dolly zoom may also be performed by using for example rails to move the camera of a drone with a camera.

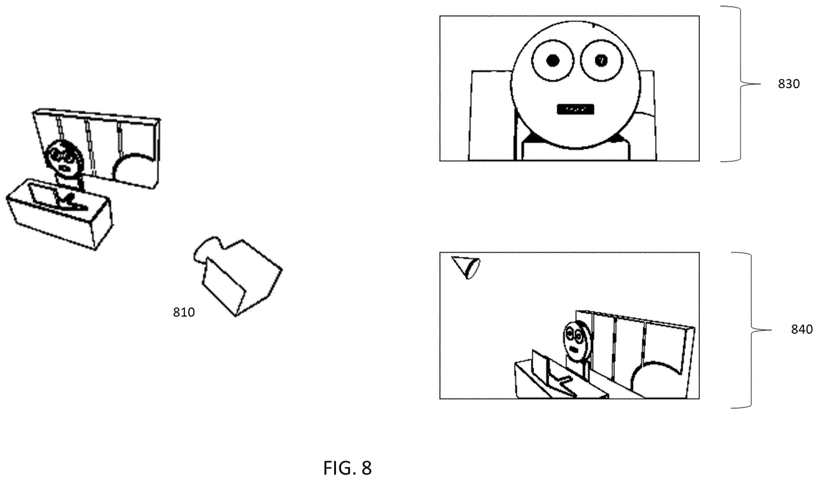

FIG. 8 illustrates yet another exemplary embodiment in which the status of the video feed is determined to change as a user 800 unmutes the microphone and a modified video feed is to be transmitted to an online video meeting the user is participating in. In this exemplary embodiment, based on the determined change in the status of the video feed, the video feed is modified by changing a camera that is used to capture the video feed.

In this exemplary embodiment, the system the user 800 uses to connect to the online video meeting comprises a computer with a built-in camera as well as an external camera 810. The external camera 810 in this exemplary embodiment provides video feed from different angle than the built-in camera of the computer. In this exemplary embodiment, the user 800 is talking and therefore the built-in camera of the computer is used to provide the video feed 830 to the online video meeting. As the user then 800 mutes the microphone, in other words, it is determined that the status of the microphone changes and therefore it is determined that the status of the video feed also changes. Based on the change in the status of the video feed, it is determined that the video feed is to be modified. In this exemplary embodiment, the modified video feed 840 is modified by capturing the video feed using the external camera 810 instead of the built-in camera. In other words, the modification comprises changing the camera from which the video feed is captured.

The switching between the cameras, or alternatively, switching between viewpoints, provides an effect in which the user 800 appears more prominent or further away than previously in the video feed. Thus, when the built-in camera is used to provide the video feed, the user 800 the user may appear as more prominent than previously due to a change in the viewpoint caused by switching the camera and other participants may concentrate on the user's facial expressions etc. better. Then, as the user 800 is muted, the user 800 the angle from which the user 800 is captured may change thereby resulting the user appearing to be further away in the video feed. Thus, in the modified video feed 840 the user may appear as less distracting to other participants but still visible to them. This may allow for the user 800 also to move around in his environment, while other participants see that the user 800 is still present and able to participate if needed.

The exemplary embodiment described above may have benefits such as a user wanting to speak will get attention more easily in an online video meeting. Visual modification drives and supports the people to people interaction and participants of the online video meeting can more easily follow a lively discussion. Also, the focus of the participant may be drawn to what matters the most at the given time.

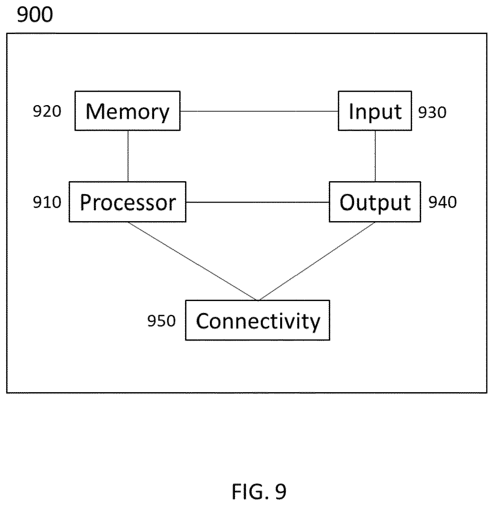

Figure 9 illustrates an apparatus 900, which may be a computing apparatus, according to an example embodiment. The apparatus 900 may be comprised in a device such as a device used to connect to an online video meeting. The apparatus 900 comprises a processor 910. The processor 910 interprets computer program instructions and process data. The processor 910 may comprise one or more programmable processors. The processor 910 may comprise programmable hardware with embedded firmware and may, alternatively or additionally, comprise one or more application specific integrated circuits, ASICs.

The processor 910 is coupled to a memory 920. The processor is configured to read and write data to and from the memory 920. The memory 920 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 920 stores computer readable instructions that are execute by the processor 910. For example, non-volatile memory stores the computer readable instructions and the processor 910 executes the instructions using volatile memory for temporary storage of data and/or instructions.

The computer readable instructions may have been pre-stored to the memory 920 or, alternatively or additionally, they may be received, by the apparatus, via electromagnetic carrier signal and/or may be copied from a physical entity such as computer program product. Execution of the computer readable instructions causes the apparatus 900 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

The apparatus 900 further comprises, or is connected to, an input unit 930. The input unit 930 comprises one or more interfaces for receiving a user input. The one or more interfaces may comprise for example one or more motion and/or orientation sensors, one or more cameras, one or more accelerometers, one or more microphones, one or more buttons and one or more touch detection units. Further, the input unit 930 may comprise an interface to which external devices may connect to.

The apparatus 900 also comprises an output unit 940. The output unit comprises or is connected to one or more displays capable of rendering visual content such as a light emitting diode (LED) display, a liquid crystal display (LCD) and a liquid crystal on silicon (LCoS) display. The output unit 940 may comprise two displays to render stereoscopic visual content. One display to render content to the left eye and the other display to render content to the right eye. The output unit 940 may further comprise a transmission unit, such as one or more waveguides or one or more lenses, to transfer the rendered visual content to the user's field of view. The output unit 940 further comprises one or more audio outputs. The one or more audio outputs may be for example loudspeakers or a set of headphones.

The apparatus 900 may further comprise a connectivity unit 950. The connectivity unit 950 enables wired and/or wireless connectivity to external networks. The connectivity unit 950 may comprise one or more antennas and one or more receivers that may be integrated to the apparatus 900 or the apparatus 900 may be connected to. The connectivity unit 650 may comprise an integrated circuit or a set of integrated circuits that provide the wireless communication capability for the apparatus 900. Alternatively, the wireless connectivity may be a hardwired application specific integrated circuit, ASIC.

It is to be noted that the apparatus 900 may further comprise various component not illustrated in the Figure 9. The various components may be hardware component and/or software components.

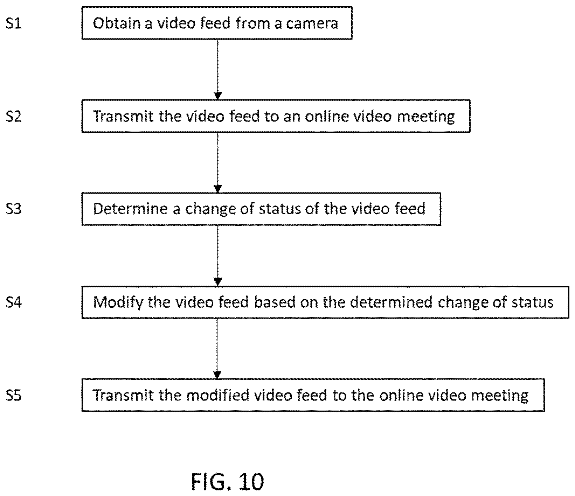

FIG. 10 illustrates a flow chart according to an exemplary embodiment. In this exemplary embodiment a video feed is obtained as illustrated in S1. The video feed is obtained from a camera which may be a camera comprised in a device that may be a computing device such as a laptop, tablet computer or a mobile phone. Alternatively, the camera may be an external camera such as a mirrorless camera, a DSLR or a webcam. The video feed may be obtained by any suitable apparatus such as the apparatus described in FIG. 9. It is also to be noted that a computing apparatus may also be understood as a computing device.

Next, in S2, the obtained video feed is transmitted to an online video meeting. For example, the apparatus that obtains the video feed may also be used to connect to the online video meeting. In S3, it is determined that there is a change of status of the video feed. The change of status may be determined for example based on recognizing a change in a status of a microphone used to capture audio for the video feed, recognizing a change of a status of a user or a detecting a change in a number of people present in the obtained video feed. The status of the microphone may be muted or unmuted. The status of the user may be speaking or silent for example.

In S4, based on the determined change of status, the video feed is modified. The modified video feed is thus modified in view of the video feed transmitted to the online video meeting prior to the determined change of status of the video feed. The modification may be a visual modification such as those described in the exemplary embodiments above. The modified video feed is then transmitted to the online video meeting as illustrated in S5.

Example embodiments described herein may be implemented using software, hardware, application logic or a combination of them. Also, if desired, different functionalities discussed herein may be performed in a different order, some functionalities may be performed concurrently, and, if desired, some of the above-mentioned functionalities may be combined.

It will be appreciated that the above described example embodiments are purely illustrative and are not limiting on the scope of the invention. Other variations and modifications will be apparent to persons skilled in the art upon reading the present specification.

## Claims

1. An apparatus comprising means for:
obtaining, from a camera, a video feed capturing a user;
transmitting the video feed to an online video meeting;
determining a change of status of the video feed, wherein determining the change of status comprises determining that the status of a microphone that is used to capture audio to the video feed, has changed from muted to unmuted;
based on the determined change of status, modifying the video feed, wherein modifying the video feed comprises blurring a background of the user; and
transmitting the modified video feed to the online video meeting.

2. An apparatus according to claim 1, wherein the modifying the video feed comprises applying zooming.

3. An apparatus according to claim 2, wherein the apparatus further comprises means for receiving an input from the user that causes the zooming to be slower than default zooming.

4. An apparatus according to any previous claim, wherein modifying the video feed further comprises cropping the video feed.

5. An apparatus according to any previous claim, wherein the apparatus further comprises means for determining that the status of the microphone has changed back to muted and in response removing the modifications applied to the modified video feed.

6. An apparatus according to any previous claim, wherein the modifying the video feed comprises obtaining the video feed from an external camera.

7. An apparatus according to any previous claim, wherein the modifying the video feed comprises changing one or more parameters of the camera.

8. An apparatus according to any previous claim, wherein the apparatus is comprised in a computing device that comprises or is connected to the camera.

9. A method comprising:
obtaining, from a camera, a video feed capturing a user;
transmitting the video feed to an online video meeting;
determining a change of status of the video feed, wherein determining the change of status comprises determining that the status of a microphone that is used to capture audio to the video feed, has changed from muted to unmuted;
based on the determined change of status, modifying the video feed, wherein modifying the video feed comprises blurring a background of the user; and
transmitting the modified video feed to the online video meeting.

10. A method according to claim 9, wherein the modifying the video feed comprises applying zooming.

11. A method according to claim 10, wherein the method further comprises receiving an input from the user that causes the zooming to be slower than default zooming.

12. A method according to any of claims 9-11, wherein the method further comprises means for determining that the status of the microphone has changed back to muted and in response removing the modifications applied to the modified video feed.

13. A computer program comprising instructions stored thereon for performing, when executed by a computer, at least the following:
obtain, from a camera, a video feed capturing a user;
transmit the video feed to an online video meeting;
determine a change of status of the video feed, wherein determining the change of status comprises determining that the status of a microphone that is used to capture audio to the video feed, has changed from muted to unmuted;
based on the determined change of status, modify the video feed, wherein modifying the video feed comprises blurring a background of the user; and
transmit the modified video feed to the online video meeting.

## Patentansprüche

1. Einrichtung, die Mittel für Folgendes umfasst:
Erhalten eines Videofeeds, der einen Benutzer erfasst, von einer Kamera;
Übertragen des Videofeeds zu einem Onlinevideomeeting;
Bestimmen einer Änderung eines Status des Videofeeds, wobei das Bestimmen der Änderung des Status das Bestimmen umfasst, dass sich der Status eines Mikrofons, das zum Erfassen Audio des Videofeeds verwendet wird, von stummgeschaltet in nicht stummgeschaltet geändert hat;
auf Basis der bestimmten Änderung des Status Modifizieren des Videofeeds, wobei das Modifizieren des Videofeeds das Verunschärfen eines Hintergrundes des Benutzers umfasst; und
Übertragen des modifizierten Videofeeds zum Onlinevideomeeting.

2. Einrichtung nach Anspruch 1, wobei das Modifizieren des Videofeeds das Anwenden eines Zoomens umfasst.

3. Einrichtung nach Anspruch 2, wobei die Einrichtung ferner Mittel zum Empfangen einer Eingabe vom Benutzer umfasst, die veranlasst, dass das Zoomen langsamer ist als ein standardmäßiges Zoomen.

4. Einrichtung nach einem der vorhergehenden Ansprüche, wobei das Modifizieren des Videofeeds ferner das Beschneiden des Videofeeds umfasst.

5. Einrichtung nach einem der vorhergehenden Ansprüche, wobei die Einrichtung ferner Mittel zum Bestimmen, dass sich der Status des Mikrofons wieder in stummgeschaltet geändert hat, und in Reaktion zum Entfernen der Modifikationen, die auf den modifizierten Videofeed angewandt wurden, umfasst.

6. Einrichtung nach einem der vorhergehenden Ansprüche, wobei das Modifizieren des Videofeeds das Erhalten des Videofeeds von einer externen Kamera umfasst.

7. Einrichtung nach einem der vorhergehenden Ansprüche, wobei das Modifizieren des Videofeeds das Ändern von einem oder mehreren Parametern der Kamera umfasst.

8. Einrichtung nach einem der vorhergehenden Ansprüche, wobei die Einrichtung in einer Datenverarbeitungsvorrichtung umfasst ist, die die Kamera umfasst oder mit derselben verbunden ist.

9. Verfahren, das Folgendes umfasst:
Erhalten eines Videofeeds, der einen Benutzer erfasst, von einer Kamera;
Übertragen des Videofeeds zu einem Onlinevideomeeting;
Bestimmen einer Änderung eines Status des Videofeeds, wobei das Bestimmen der Änderung des Status das Bestimmen umfasst, dass sich der Status eines Mikrofons, das zum Erfassen Audio des Videofeeds verwendet wird, von stummgeschaltet in nicht stummgeschaltet geändert hat;
auf Basis der bestimmten Änderung des Status Modifizieren des Videofeeds, wobei das Modifizieren des Videofeeds das Verunschärfen eines Hintergrundes des Benutzers umfasst; und
Übertragen des modifizierten Videofeeds zum Onlinevideomeeting.

10. Verfahren nach Anspruch 9, wobei das Modifizieren des Videofeeds das Anwenden eines Zoomens umfasst.

11. Verfahren nach Anspruch 10, wobei das Verfahren ferner das Empfangen einer Eingabe vom Benutzer umfasst, die veranlasst, dass das Zoomen langsamer ist als ein standardmäßiges Zoomen.

12. Verfahren nach einem der Ansprüche 9 bis 11, wobei das Verfahren ferner Mittel zum Bestimmen, dass sich der Status des Mikrofons wieder in stummgeschaltet geändert hat, und in Reaktion zum Entfernen der Modifikationen, die auf den modifizierten Videofeed angewandt wurden, umfasst.

13. Computerprogramm, das darin gespeicherte Anweisungen zum Durchführen von mindestens Folgendem umfasst, wenn sie von einem Computer ausgeführt werden:
Erhalten eines Videofeeds, der einen Benutzer erfasst, von einer Kamera;
Übertragen des Videofeeds zu einem Onlinevideomeeting;
Bestimmen einer Änderung eines Status des Videofeeds, wobei das Bestimmen der Änderung des Status das Bestimmen umfasst, dass sich der Status eines Mikrofons, das zum Erfassen Audio des Videofeeds verwendet wird, von stummgeschaltet in nicht stummgeschaltet geändert hat;
auf Basis der bestimmten Änderung des Status Modifizieren des Videofeeds, wobei das Modifizieren des Videofeeds das Verunschärfen eines Hintergrundes des Benutzers umfasst; und
Übertragen des modifizierten Videofeeds zum Onlinevideomeeting.

## Revendications

1. Appareil comprenant des moyens pour
obtenir à partir d'une caméra un flux vidéo capturant un utilisateur ;
transmettre le flux vidéo à une réunion vidéo en ligne ;
déterminer un changement de statut du flux vidéo, dans lequel le fait de déterminer le changement de statut comprend le fait de déterminer que le statut d'un microphone utilisé pour capturer un audio au flux vidéo est passé de silencieux à non silencieux ;
sur la base du changement de statut déterminé, modifier le flux vidéo, dans lequel le fait de modifier le flux vidéo comprend le fait de rendre flou un arrière-plan de l'utilisateur ; et
transmettre le flux vidéo modifié à la réunion vidéo en ligne.

2. Appareil selon la revendication 1, dans lequel le fait de modifier le flux vidéo comprend le fait d'appliquer un zoom.

3. Appareil selon la revendication 2, dans lequel l'appareil comprend en outre des moyens pour recevoir une entrée de l'utilisateur qui fait en sorte que le zoom soit plus lent que le zoom par défaut.

4. Appareil selon l'une des revendications précédentes, dans lequel le fait de modifier le flux vidéo comprend en outre le fait de recadrer le flux vidéo.

5. Appareil selon l'une des revendications précédentes, dans lequel l'appareil comprend en outre des moyens pour déterminer que le statut du microphone est repassé à silencieux en réponse à la suppression des modifications appliquées au flux vidéo modifié.

6. Appareil selon l'une des revendications précédentes, dans lequel le fait de modifier le flux vidéo comprend le fait d'obtenir le flux vidéo à partir d'une caméra externe.

7. Appareil selon l'une des revendications précédentes, dans lequel le fait de modifier le flux vidéo comprend le fait de changer un ou plusieurs paramètres de la caméra.

8. Appareil selon l'une des revendications précédentes, dans lequel l'appareil est comprises dans un dispositif informatique qui comprend la caméra ou qui est connecté à celle-ci.

9. Procédé comprenant les étapes suivantes :
obtenir à partir d'une caméra un flux vidéo capturant un utilisateur ;
transmettre le flux vidéo à une réunion vidéo en ligne ;
déterminer un changement de statut du flux vidéo, dans lequel le fait de déterminer le changement de statut comprend le fait de déterminer que le statut d'un microphone utilisé pour capturer un audio au flux vidéo est passé de silencieux à non silencieux ;
sur la base du changement de statut déterminé, modifier le flux vidéo, dans lequel le fait de modifier le flux vidéo comprend le fait de rendre flou un arrière-plan de l'utilisateur ; et
transmettre le flux vidéo modifié à la réunion vidéo en ligne.

10. Procédé selon la revendication 9, dans lequel le fait de modifier le flux vidéo comprend le fait d'appliquer un zoom.

11. Procédé selon la revendication 10 dans lequel le procédé comprend en outre le fait de recevoir une entrée de l'utilisateur qui fait en sorte que le zoom soit plus lent que le zoom par défaut.

12. Procédé selon l'une des revendications 9 à 11, dans lequel le procédé comprend en outre des moyens pour déterminer que le statut du microphone est repassé à silencieux en réponse à la suppression des modifications appliquées au flux vidéo modifié.

13. Programme informatique comprenant des instructions stockées sur celui-ci pour effectuer, lorsqu'elles sont exécutées par un ordinateur, au moins ce qui suit :
obtenir à partir d'une caméra un flux vidéo capturant un utilisateur ;
transmettre le flux vidéo à une réunion vidéo en ligne ;
déterminer un changement de statut du flux vidéo, dans lequel le fait de déterminer le changement de statut comprend le fait de déterminer que le statut d'un microphone utilisé pour capturer un audio au flux vidéo est passé de silencieux à non silencieux ;
sur la base du changement de statut déterminé, modifier le flux vidéo, dans lequel le fait de modifier le flux vidéo comprend le fait de rendre flou un arrière-plan de l'utilisateur ; et
transmettre le flux vidéo modifié à la réunion vidéo en ligne.
